(19) Europäisches Patentamt
European Patent Office
Office européen des brevets

(11) **EP 2 451 687 B1**

(12) **EUROPÄISCHE PATENTSCHRIFT**

(45) Veröffentlichungstag und Bekanntmachung des Hinweises auf die Patenterteilung:
**28.01.2015 Patentblatt 2015/05**

(51) Int Cl.:
*B60W 50/06* (2006.01)    *B60W 10/04* (2006.01)
*B60W 30/18* (2012.01)    *B60W 40/00* (2006.01)

(21) Anmeldenummer: **10730452.9**

(22) Anmeldetag: **05.07.2010**

(86) Internationale Anmeldenummer:
**PCT/EP2010/059533**

(87) Internationale Veröffentlichungsnummer:
**WO 2011/003848 (13.01.2011 Gazette 2011/02)**

(54) **VERFAHREN ZUR KOORDINATION VON ZUMINDEST EINEM ANTRIEBSAGGREGAT**

METHOD FOR COORDINATING AT LEAST ONE DRIVE AGGREGATE<0}

PROCÉDÉ DE COORDINATION D'AU MOINS UN ORGANE DE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **10.07.2009 DE 102009027603**

(43) Veröffentlichungstag der Anmeldung:
**16.05.2012 Patentblatt 2012/20**

(73) Patentinhaber: **Robert Bosch GmbH
70442 Stuttgart (DE)**

(72) Erfinder: **FALKENSTEIN, Jens-Werner
73434 Aalen (DE)**

(56) Entgegenhaltungen:
**EP-A2- 0 507 072    EP-A2- 1 065 091
WO-A1-01/54940    DE-A1- 4 239 711**

**EP 2 451 687 B1**

**Beschreibung**

Die Erfindung betrifft ein Verfahren zur Koordination von zumindest einem Antriebsaggregat.

Stand der Technik

Für Kraftfahrzeuge sind Antriebstränge bekannt, die mehrere Antriebsaggregate nutzen. Bei Hybridfahrzeugen erzeugen als vorgesehene Antriebsaggregate bspw. ein Verbrennungsmotor und mindestens ein Elektromotor gemeinsam ein Antriebsdrehmoment. Hierzu werden mehrere Steuergeräte eingesetzt, die über ein Bussystem miteinander kommunizieren, wobei in vielen Fällen ein übergeordnetes Steuergerät zum Einsatz kommen kann, das Funktionen der Antriebsaggregate koordiniert. Den Antriebsaggregaten sind dann ein oder mehrere Aggregatsteuergeräte zugeordnet. Eines der Aggregatsteuergeräte kann zusätzlich die Aufgaben des übergeordneten Steuergeräts übernehmen.

Das übergeordnete Steuergerät ist dazu ausgebildet, Funktionen der Antriebsaggregate zu koordinieren und den Antriebsaggregaten Sollbetriebspunkte, typischerweise Sollmomente, vorzugeben. Dazu können die Aggregatsteuergeräte dem übergeordneten Steuergerät als Informationen Betriebsparameter über die momentan möglichen Betriebsbereiche der Aggregate und bei Bedarf zusätzlich momentan optimale Betriebsbereiche der Aggregate übermitteln. Das übergeordnete Steuergerät nutzt diese Informationen als Randbedingungen für die Koordination zur Einstellung von Sollbetriebspunkten.

Die momentan möglichen und optimalen Betriebsbereiche der Aggregate ändern sich im Laufe der Zeit, z. B. durch dynamische Effekte im Luftsystems des Verbrennungsmotors, die u. a. als Turboloch bezeichnet werden, oder durch das Ein- bzw. Ausschalten von Nebenaggregaten, die gemeinsam mit Elektromotoren an einem elektrischen Bordnetz hängen.

Bei der Kommunikation zwischen den Steuergeräten, d. h. zwischen den Aggregatsteuergeräten und dem übergeordneten Steuergerät, kann es zu Zeitverzögerungen kommen, so dass die von den Antriebsaggregaten gemeldeten Betriebsbereiche das übergeordnete Steuergerät zeitlich verzögert erreichen. Typischerweise stimmen die gemeldeten Betriebsbereiche im übergeordneten Steuergerät meist nicht mit den in den Aggregatsteuergeräten ermittelten momentanen Betriebsbereichen überein, da die gemeldeten Betriebsbereiche aufgrund der Zeitverzögerung im übergeordneten Steuergerät veraltet sind.

Folglich stellt das übergeordnete Steuergerät den Antriebsaggregaten in der Regel Sollbetriebspunkte, die auf diesen veralteten gemeldeten Betriebsbereichen basieren, bereit. Die Sollbetriebspunkte werden vom übergeordneten Steuergerät an die Aggregatsteuergeräte gemeldet, wodurch sich erneut eine zeitliche Verzögerung ergibt. Aufgrund dieser zweifachen Verzögerung kann ein dem Aggregatsteuergerät gemeldeter Sollbetriebspunkt außerhalb des im Aggregatsteuergerät ermittelten, momentan möglichen Betriebsbereichs liegen, was dazu führen kann, dass dieser gemeldete Sollbetriebspunkt nicht stellbar ist, so dass die Qualität der Steuerung negativ beeinflusst wird. Selbst wenn der gemeldete, zeitlich verzögerte Sollbetriebspunkt stellbar ist, kann dieser außerhalb eines momentan optimalen Betriebsbereichs, der von dem Aggregatsteuergerät ermittelt wird, liegen, obwohl das übergeordnete Steuergerät einen optimalen Betriebsbereich angefordert hat.

Aus der Druckschrift DE 196 46 387 A1 ist ein Steuerverfahren für ein System in einem Kraftfahrzeug mit einer Zentraleinheit und einer Mehrzahl von Modulen, die mit der Zentraleinheit verbunden sind, bekannt. Es wird in jedem Modul eine Aktivierungsinformation gespeichert, wobei zum Aktivieren von Modulen eine Steuerinformation von der Zentraleinheit an die Module übertragen wird. Dabei werden nur diejenigen der angesprochenen Module aktiviert, deren Aktivierungsinformation zu der übertragenen Steuerinformation in einer vorgegebenen Beziehung steht.

Ein Verfahren zur Informationsübertragung in Kraftfahrzeugen ist in der Druckschrift DE 197 55 311 B4 beschrieben. Dabei ist wenigstens eine Steuereinheit dazu ausgebildet, Informationen im Rahmen von Botschaften auszusenden, wobei wenigstens zwei Betriebsgrößen, die nicht gleichzeitig vorliegen, und wenigstens eine weitere Information ausgesendet werden, wobei die wenigstens eine weitere Information im Rahmen der Botschaft der gerade nicht vorliegenden Betriebsgröße übermittelt wird.

Gegenstand der Druckschrift DE 10 2008 022 082 A1 ist ein Verfahren zum Betreiben eines Antriebsstrangs in einem Fahrzeug, der einen elektrischen Antrieb und eine Brennkraftmaschine umfasst. Bei dem Verfahren wird ein Drehmoment zum Antreiben des Fahrzeugs sowohl von dem elektrischen Antrieb als auch von der Brennkraftmaschine bereitgestellt, wobei das Brennkraftmaschinendrehmoment innerhalb eines zulässigen Bereichs verändert wird. Falls die Brennkraftmaschine an einem Rand des Bereichs betrieben wird, wird überprüft, ob eine ausgewählte Betriebsbedingung durch die Brennkraftmaschine vorgesehen werden kann.

Die Druckschrift EP 0 507 072 A1, die den Oberbegriff des Anspruchs 1 bildet, beschreibt ein elektronisches System für ein Fahrzeug. Dieses System umfasst einen Master-Controller, der über einen Bus mit einem ersten Steuergerät zur Motorsteuerung und einem zweiten Steuergerät zur Getriebesteuerung verbunden ist, wobei ein erstes Element an weitere Elemente Sollwerte übermittelt.

Offenbarung der Erfindung

Vor diesem Hintergrund wird ein Verfahren mit den Merkmalen des unabhängigen Patentanspruchs vorgestellt. Ausgestaltungen der Erfindung ergeben sich aus den abhängigen Patentansprüchen.

Die Erfindung ermöglicht u. a. die Koordination von Antriebsaggregaten mit mehreren kommunizierenden Steuergeräten und kann bspw. bei der Entwicklung einer Antriebsstrangsteuerung für Hybridfahrzeuge eingesetzt werden. Üblicherweise ist dabei einem Aggregat mindestens ein Steuergerät, das auch als Aggregatsteuergerät bezeichnet werden kann, zugeordnet. Eines der genannten Aggregatsteuergeräte kann zugleich auch als das übergeordnete Steuergerät ausgebildet sein und/oder dessen Funktion übernehmen.

Bei einer Umsetzung der Erfindung ist vorgesehen, dass ein übergeordnetes Steuergerät, oder ein Aggregatsteuergerät, das diese Aufgabe übernimmt, gemeldete mögliche und/oder gemeldete optimale Betriebsbereiche, in der Regel Basismomente, die von den Aggregatsteuergeräten gemeldet werden, üblicherweise zeitverzögert empfängt. Basierend auf diesen Betriebsbereichen werden von dem übergeordneten Steuergerät Sollbetriebspunkte, wie bspw. Sollmomente, für die Antriebsaggregate bestimmt. Weiterhin wird mindestens eine Grenze eines von einem Aggregatsteuergerät ursprünglich gemeldeten möglichen und/oder gemeldeten optimalen Betriebsbereichs zusammen mit dem Sollbetriebspunkt an mindestens ein Aggregatsteuergerät zurückgemeldet. In Ausgestaltung des Verfahrens werden bei der Kommunikation zwischen den Steuergeräten als Betriebsparameter typischerweise verschiedene Momente, bspw. Basismomente, Sollmomente sowie Maximalmomente und/oder Minimalmomente als Grenzen ausgetauscht.

Das Aggregatsteuergerät erhält dann zusätzlich zu dem Sollbetriebspunkt mit dem zurückgemeldeten möglichen und/oder zurückgemeldeten optimalen Betriebsbereich Informationen über die Randbedingungen, die im übergeordneten Steuergerät für die Bestimmung des Sollbetriebspunkts gültig waren.

Das mindestens eine Aggregatsteuergerät kann in Ausgestaltung eine Korrektur des Sollbetriebspunkts vornehmen. Diese Korrektur kann auf der von dem übergeordneten Steuergerät zurückgemeldeten, in der Regel zweifach verzögerten Grenze als ein Betriebsparameter des zurückgemeldeten möglichen und/oder zurückgemeldeten optimalen Betriebsbereichs basieren. Eine typischerweise unverzögerte Grenze als ein weiterer Betriebsparameter des im Aggregatsteuergerät aktuell ermittelten, momentan möglichen und/oder momentan optimalen Betriebsbereiches kann ebenfalls zur Korrektur verwendet werden.

In weiterer Ausgestaltung kann das übergeordnete Steuergerät eine Korrektur des Sollbetriebspunkts im Aggregatsteuergerät beeinflussen. Dies kann bspw. dadurch erfolgen, dass das übergeordnete Steuergerät Grenzen für die Korrektur vorgibt oder die Korrektur in bestimmten Betriebszuständen eines Antriebsstrangs und/oder eines zugeordneten Antriebsaggregats sperrt, z. B. bei Drehzahlbegrenzungs-, ESP- oder Getriebeeingriffen, bei einem aktivem Leerlaufregler oder zur Formung des Antriebsmoments aus Fahrkomfortgründen. Somit kann der von dem übergeordneten Steuergerät vorgegebene Sollbetriebspunkt möglichst exakt eingestellt werden.

Eine Methode zum Bestimmen der Korrektur kann je nach Betriebszustand des Antriebsstrangs und/oder eines Antriebsaggregats unterschiedlich gewählt werden. Außerdem kann die Korrektur sprungfrei erfolgen. Es ist ebenfalls möglich, dass das Aggregatsteuergerät die Korrektur des Sollbetriebspunkts an das übergeordnete Steuergerät und/oder mindestens ein weiteres Aggregatsteuergerät meldet. Dieses weitere Aggregatsteuergerät kann einen ihm zugeordneten Sollbetriebspunkt basierend auf der empfangenen bzw. gemeldeten Korrektur ebenfalls korrigieren.

Mit der Erfindung kann eine optimale dynamische Koordination von mehreren Antriebsaggregaten mit mehreren miteinander kommunizierenden Steuergeräten erreicht werden. Negative Auswirkungen von Zeitverzögerungen bei der Kommunikation zwischen den Steuergeräten werden minimiert.

Die Erfindung kann bei allen Kraftfahrzeugantrieben eingesetzt werden, bei denen zumindest ein Antriebsaggregat und mehrere Steuergeräte eingesetzt werden. Die Aufgaben des übergeordneten Steuergeräts können bspw. in einem als Elektromotorsteuergerät (MCU) ausgebildeten Aggregatsteuergerät integriert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen

Figur 1 zeigt in schematischer Darstellung eine Anordnung mit Steuergeräten zur Koordination von Antriebsaggregaten eines Fahrzeugs, wobei verschiedene Betriebsparameter, die bei einem herkömmlichen Betrieb zwischen den Steuergeräten ausgetauscht werden, dargestellt sind.

Figur 2 zeigt ein erstes Diagramm für Betriebsparameter, die bei einem Betrieb der Anordnung aus Figur 1 ausgetauscht werden.

Figur 3 zeigt ein zweites Diagramm für Betriebsparameter, die bei einem Betrieb der Anordnung aus Figur 1 ausgetauscht werden.

Figur 4 zeigt ein drittes Diagramm für Betriebsparameter, die bei einem Betrieb der Anordnung aus Figur 1 ausgetauscht werden.

Figur 5 zeigt die anhand von Figur 1 beschriebene Anordnung mit Betriebsparametern, die bei einer Ausführungsform des erfindungsgemäßen Verfahrens zwischen den Steuergeräten ausgetauscht werden.

Figur 6 zeigt Details zu der anhand von Figur 5 beschriebenen Ausführungsform des erfindungsgemäßen Verfahrens.

Figur 7 zeigt in schematischer Darstellung ein Diagramm mit Betriebsparametern, die bei der anhand der Figuren 5 und 6 beschriebenen Ausführungsform des erfindungsgemäßen Verfahrens ausgetauscht werden.

Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

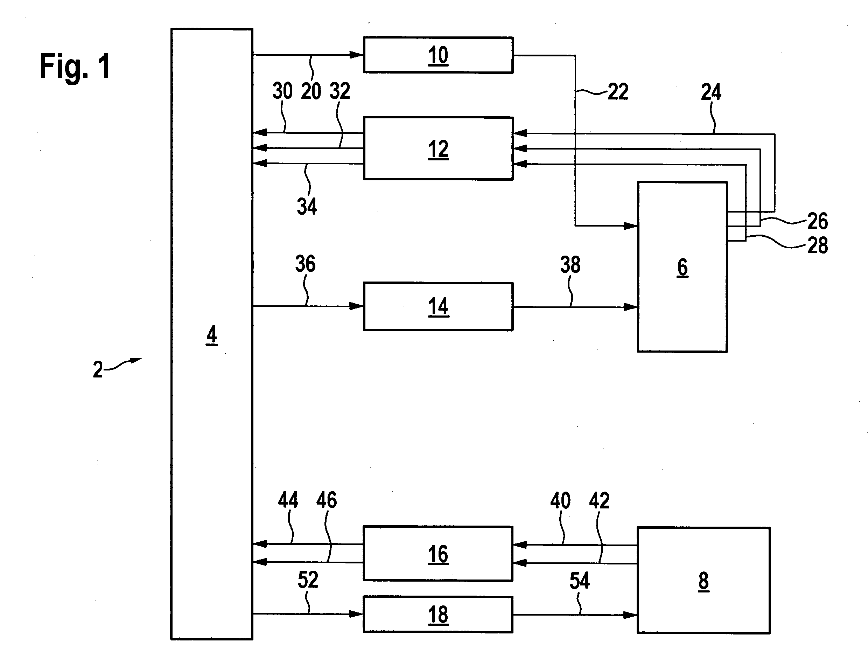

Die in Figur 1 schematisch dargestellte Anordnung 2 umfasst ein übergeordnetes Steuergerät 4 (HCU), ein zweites Steuergerät, das hier als Aggregatsteuergerät 6 für einen Verbrennungsmotor ausgebildet ist, sowie ein drittes Steuergerät, das hier als Aggregatsteuergerät 8 für einen Elektromotor des Fahrzeugs ausgebildet ist.

Außerdem zeigt die Darstellung aus Figur 1 eine erste Verzögerung 10 (Delay 1), eine zweite Verzögerung 12 (Delay 2), eine dritte Verzögerung 14 (Delay 3), eine vierte Verzögerung 16 (Delay 4) sowie eine fünfte Verzögerung 18 (Delay 5).

Der in Figur 1 nicht dargestellte Antriebsstrang umfasst als erstes Antriebsaggregat einen Verbrennungsmotor, wie bspw. einen Ottomotor, mit einem elektronischen Gaspedal (E-Gas), das eine elektronische Drosselklappe aufweist und dessen Schwungrad mit einem Elektromotor (Kurbelwellenstartergenerator) als zweites Antriebsaggregat gekoppelt ist. Die Istdrehmomente des Verbrennungsmotors und des Elektromotors addieren sich bei Betrieb zu einem Istdrehmoment des gesamten Antriebs, d. h. zu einem Summenmoment des Verbrennungsmotors und des Elektromotors. Der Verbrennungsmotor wird von einem Verbrennungsmotorsteuergerät (ECU, Engine Control Unit) als erstem Aggregatsteuergerät 6 und der Elektromotor (EIM) wird von einem Elektromotorsteuergerät (MCU, Motor Control Unit) als zweitem Aggregatsteuergerät 8 angesteuert. Funktionen der genannten Antriebsaggregate und Aggregatsteuergeräte 6, 8 werden von dem übergeordneten Steuergerät 4 (HCU, Hybrid Control Unit) koordiniert. Alle Steuergeräte sind über ein Bussystem miteinander verbunden, die bei der Kommunikation zwischen den Steuergeräten auftretenden Zeitverzögerungen werden in dem in Figur 1 gezeigten Simulationsmodell für die Anordnung 2 durch Verzögerungen 10, 12, 14, 16, 18 (Delay1 bis Delay5) von je 10 Millisekunden nachgebildet.

Das übergeordnete Steuergerät 4 (HCU) gibt für den Verbrennungsmotor als Betriebsparameter für einen Sollbetriebsbereich ein Vorhalte-Sollmoment HCU_trqLeadEng 20 vor, das hier auf den langsamen Luftpfad des Verbrennungsmotors wirkt und die Sollfüllung beeinflusst. Aufgrund der ersten Verzögerung 10 geht daraus das zeitverzögerte Vorhalte-Sollmoment ECU_trqLeadEng 22 hervor. Eine Istfüllung und damit das Basismoment ECU_trqBs 24 folgt dem Vorhalte-Sollmoment HCU_trqLeadEng 20 aufgrund dynamischer Effekte im Saugrohr des Verbrennungsmotors und der Verzögerung 10 (Delay1) zeitverzögert. Der Verbrennungsmotor erzeugt im idealen Betrieb, d. h. bei idealem Zündwinkel, als Betriebsparameter das Basismoment ECU_trqBs 24. Durch eine Spätverstellung des Zündwinkels kann das Istmoment des Verbrennungsmotors gegenüber dem Basismoment ECU_trqBs 24 reduziert werden, allerdings nur bis zum minimalen Basismoment ECU_trqBsMin 26, das durch die Brennbarkeitsgrenze gegeben ist. Dabei wird auch der Wirkungsgrad des Verbrennungsmotors verschlechtert.

Eine weitere Momentenreduktion kann durch eine Einspritzausblendung einzelner Zylinder erfolgen, was allerdings mit erhöhten Abgasemissionen verbunden ist. Das Istmoment des Verbrennungsmotors lässt sich durch Einspritzausblendung aller Zylinder bis auf das Minimalmoment ECU_trqMin 28 reduzieren, was dem Verlustmoment des Verbrennungsmotors entspricht. Die drei genannten Betriebsparameter werden von dem ersten Aggregatsteuergerät 6 über die zweite Verzögerung 12 an das übergeordnete Steuergerät 4 übermittelt, wobei aus dem Basismoment ECU_trqBs 24 als Betriebsparameter das zeitverzögert gemeldete Basismoment HCU_trqBs 30, aus dem minimalen Basismoment ECU_trqBsMin 26 das zeitverzögert gemeldete minimale Basismoment HCU_trqBsMin 32 und aus dem Minimalmoment ECU_trqMin 28 das zeitverzögert gemeldete Minimalmoment HCU_trqMin 34 hervorgeht.

Es gilt:

$$ECU\_trqMin < ECU\_trqBsMin < ECU\_trqBs \qquad (F1)$$

Das übergeordnete Steuergerät 4 (HCU) gibt als Sollbetriebspunkt ein Sollmoment HCU_trqDesEng 36 für den Verbrennungsmotor vor, das aufgrund der sich bei der Kommunikation ergebenden dritten Verzögerung 14 zeitverzögert als Sollmoment ECU_trqDesEngIn 38 und somit als zeitverzögerter Sollbetriebspunkt im Aggregatsteuergerät 6 des Verbrennungsmotors ankommt. Entspricht das Sollmoment ECU_trqDesEngIn 38 dem Basismoment ECU_trqBs 24, so wird der Verbrennungsmotor bei idealem Zündwinkel und idealem Wirkungsgrad betrieben. Ist das Sollmoment ECU_trqDesEngIn 38 kleiner als das Basismoment ECU_trqBs 24, so erfolgt eine Spätverstellung des Zündwinkels oder Einspritzausblendung, was zu einer Verschlechterung des Wirkungsgrads und/oder der Emission führen kann. Ist das Sollmoment ECU_trqDesEngIn 38 größer als das Basismoment ECU_trqBs 24, kann es von dem Verbrennungsmotor nicht gestellt werden.

Die im Aggregatsteuergerät 6 (ECU) für den Verbrennungsmotor ermittelten Betriebsparameter für momentane Grenzen, d. h. das Basismoment ECU_trqBs 24, das minimale Basismoment ECU_trqBsMin 26 und das Minimalmoment ECU_trqMin 28, geben den momentan möglichen Betriebsbereich des Verbrennungsmotors an. Das momentane Basismoment ECU_trqBs 24 entspricht dem momentan optimalen Betriebsbereich. Diese genannten momentanen Grenzen werden als Basis für die Koordination an das übergeordnete Steuergerät 4 (HCU) gemeldet. Die im übergeordneten Steuergerät 4 (HCU) verfügbaren, gemeldeten Grenzen, d. h. das Basismoment HCU_trqBs 30, das minimale Basismoment HCU_trqBsMin 32 und das Minimalmoment HCU_trqMin 34 geben den gemeldeten möglichen und den gemeldeten optimalen Betriebsbereich an. Sie sind gegenüber den vom Aggregatsteuergerät 6 (ECU) ermittelten momentanen Grenzen wegen der bei der Kommunikation auftretenden zweiten Verzögerung 12 (Delay 2) zeitlich verzögert.

Außerdem sind in Figur 1 noch ein vom übergeordneten Steuergerät 4 bereitgestelltes Sollmoment HCU_trqDesEIM 52 für den Elektromotor und ein daraus nach der fünften Verzögerung 18 resultierendes Sollmoment MCU_trqDesEIMIn 54 gezeigt.

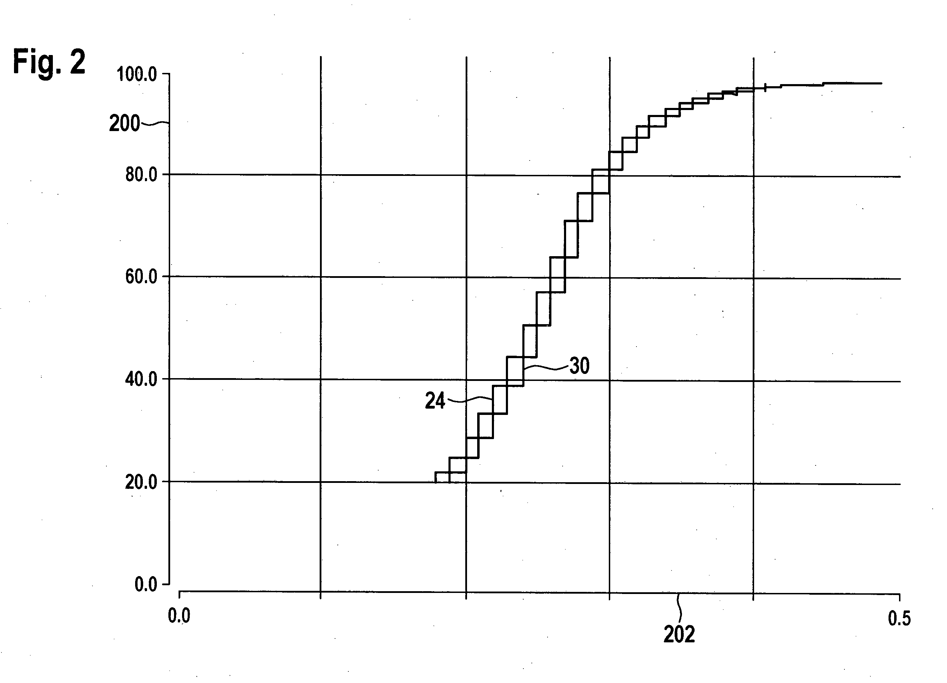

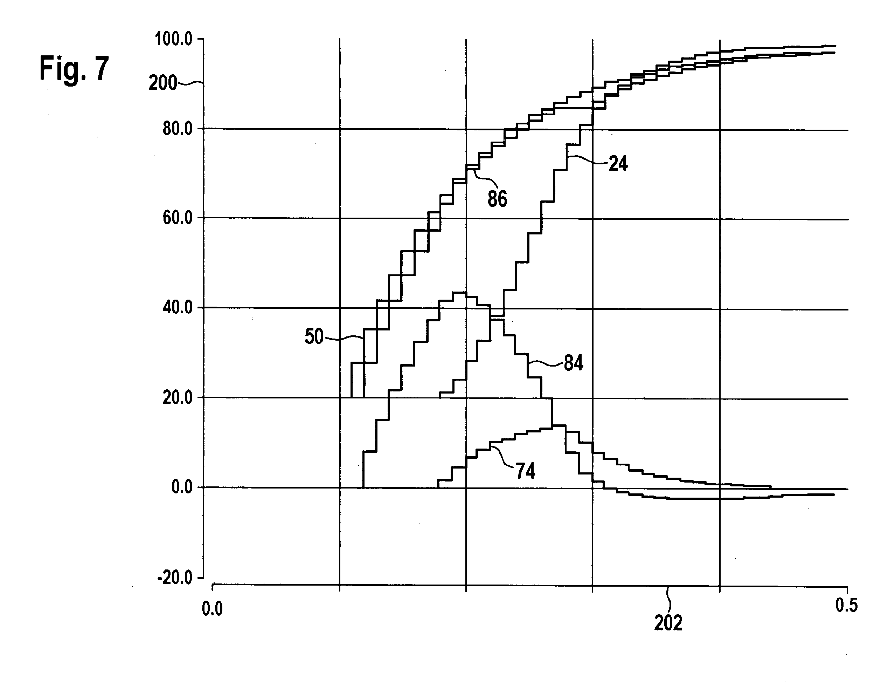

In den Diagrammen aus den Figuren 2 bis 4 sowie in dem Diagram aus Figur 7 sind jeweils entlang einer vertikal orientierten Achse 200 Werte für einzelne Betriebsparameter, die bei der Kommunikation ausgetauscht werden, über einer horizontal orientierten Achse 202 für die Zeit aufgetragen.

Das Diagramm aus Figur 2 zeigt beispielhaft die zeitlichen Verläufe des momentanen Basismoments ECU_trqBs 24 und des gemeldeten Basismoments HCU_trqBs 30. Darin ist die zweite Verzögerung 12 erkennbar.

Auch die im zweiten Aggregatsteuergerät 8 (MCU) für den Elektromotor ermittelten momentanen Grenzen für ein Maximalmoment MCU_trqMaxEIM 40 und ein Minimalmoment MCU_trqMinEIM 42 des Elektromotors sind als gemeldete Grenzen für ein Maximalmoment HCU_trqMaxEIM 44 und ein Minimalmoment HCU_trqMinEIM 46 wegen der vierten Verzögerung 16 im übergeordneten Steuergerät 4 (HCU) erst zeitlich verzögert verfügbar.

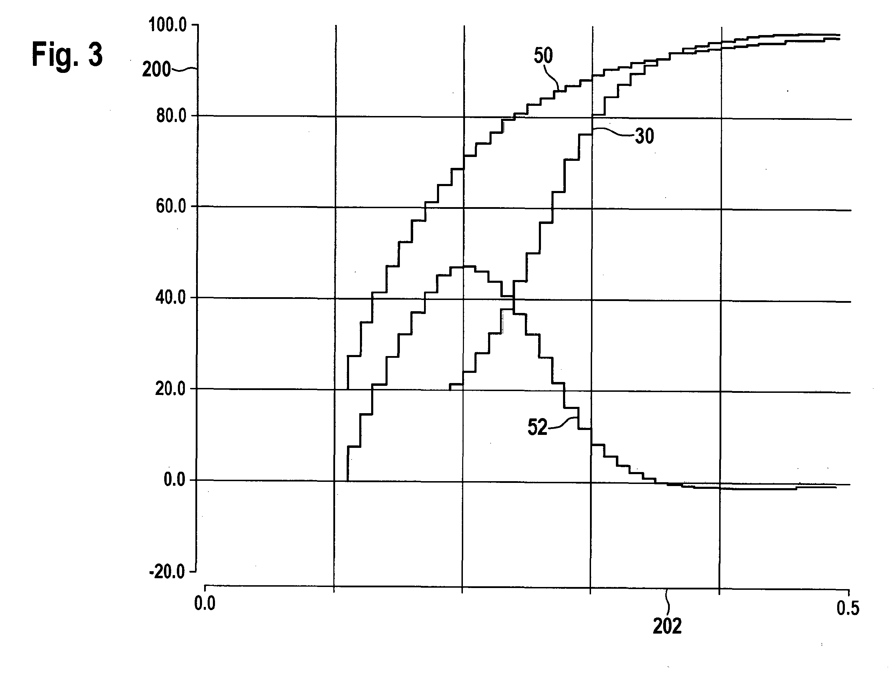

In dem Diagramm aus Figur 3 ist die Koordination im übergeordneten Steuergerät 4 (HCU) anhand eines Sprungs eines Fahrerwunschmoments von 20 Nm auf 100 Nm zum Zeitpunkt t = 0.1 Sekunden dargestellt. Um eine Anregung von Triebstrangschwingungen zu vermeiden, wird ein Fahrerwunschmoment bzw. Summensollmoment HCU_trqDesFlt 50 tiefpassgefiltert. Dieses soll gemeinsam von dem Verbrennungsmotor und dem Elektromotor gestellt werden. Das gemeldete Basismoment HCU_trqBs 30 folgt dem Vorhalte-Sollmoment HCU_trqLeadEng 20 verzögert, was aufgrund dynamischer Effekte im Saugrohr des Verbrennungsmotors und der Verzögerung durch die Kommunikation erfolgt. Die Koordination im übergeordneten Steuergerät 4 (HCU) versucht, den Verbrennungsmotor bei idealem Zündwinkel zu betreiben und setzt dazu das Sollmoment HCU_trqDesEng 36 gleich dem gemeldeten Basismoment HCU_trqBs 30. Das Sollmoment HCU_trqDesEIM 52 für den Elektromotor gleicht die Differenz zum gefilterten Summensollmoment HCU_trqDesFlt 50 aus, so dass gilt:

$$HCU\_trqDesEng + HCU\_trqDesEIM = HCU\_trqDesFlt \qquad (F2)$$

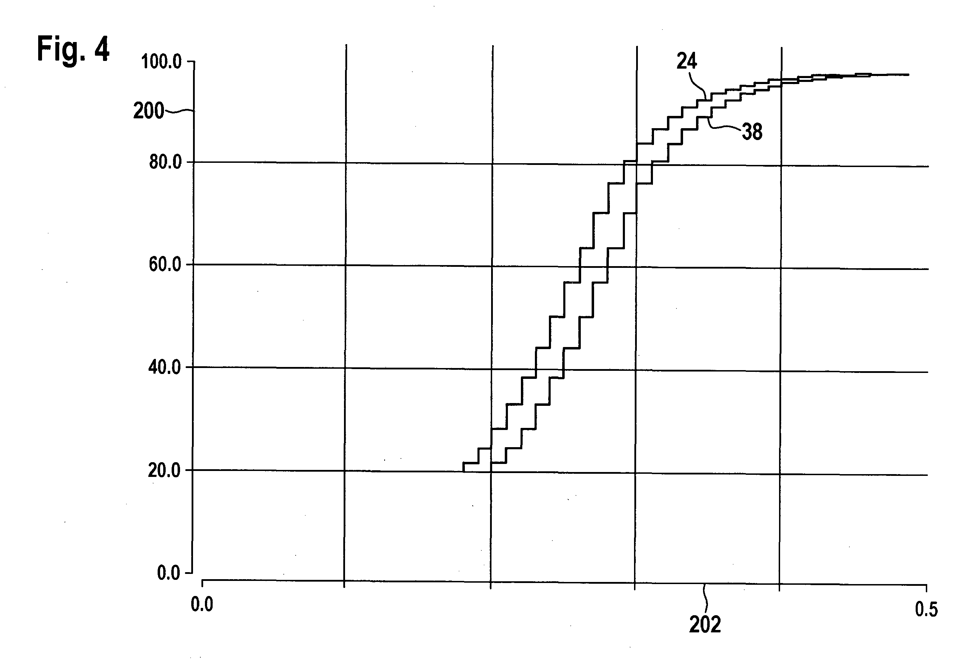

Das Diagramm aus Figur 4 zeigt für die Koordination entsprechend dem Diagramm aus Figur 3 das im Aggregatsteuergerät 6 für den Verbrennungsmotorsteuer ermittelte, momentane Basismoment ECU_trqBs 24 und das von dem übergeordneten Steuergerät 4 (HCU) an das Aggregatsteuergerät 6 (ECU) für den Verbrennungsmotor gemeldete Sollmoment ECU_trqDesEngIn 38, das gegenüber dem Sollmoment HCU_trqDesEng 36 um 10 Millisekunden verzögert ist.

Obwohl das übergeordnete Steuergerät 4 (HCU) versucht, den Verbrennungsmotor bei idealem Zündwinkel zu betreiben, verzögert sich das gemeldete Sollmoment ECU_trqDesEngln 38 aufgrund der zweifachen Verzögerung um 20 Millisekunden gegenüber dem momentanen Basismoment ECU_trqBs 24 und weicht daher bis ca. 15 Nm davon ab. Ohne weitere Maßnahmen entsteht eine Abweichung vom idealen Zündwinkel und damit vom idealen Wirkungsgrad, was den Kraftstoffverbrauch und Abgasemissionen erhöht.

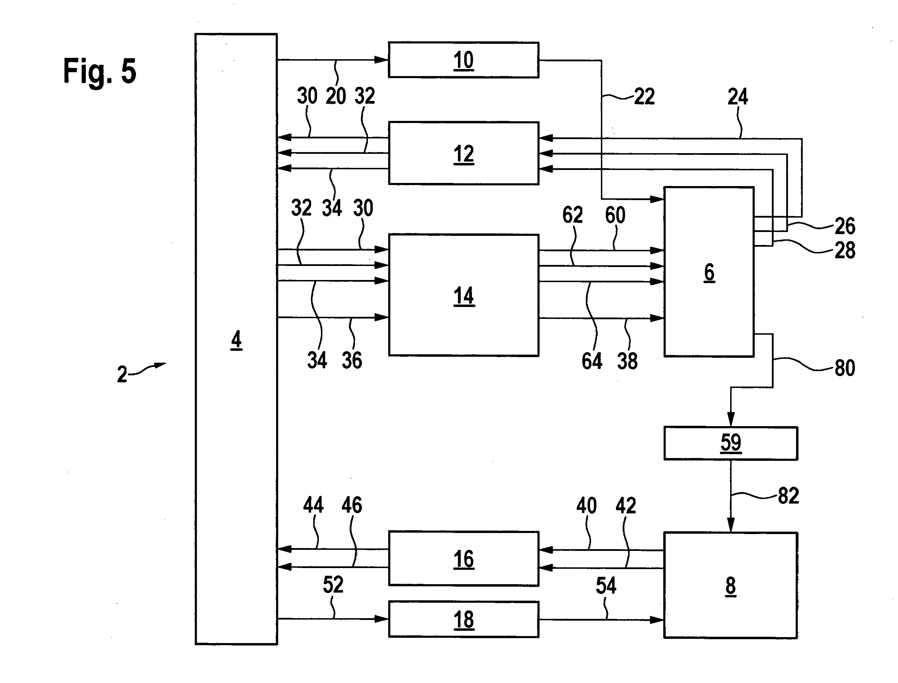

Figur 5 zeigt in schematischer Darstellung die Anordnung 2 aus Figur 1 bei einer Ausführung des erfindungsgemäßen Verfahrens. Dabei sind in Figur 5 zusätzlich noch eine sechste Verzögerung 59 und damit verbundene Korrekturwerte ECU_trqCorrEIM 80 und MCU_trqCorrEIMln 82 gezeigt.

Die im übergeordneten Steuergerät 4 (HCU) verfügbaren, gemeldeten Grenzen und somit Betriebsparameter des Betriebsbereichs, hier das Basismoment HCU_trqBs 30, ein minimales Basismoment HCU_trqBsMin 32 und ein Minimalmoment HCU_trqMin 34, werden zusammen mit dem im übergeordneten Steuergerät 4 (HCU) ermittelten Sollmoment HCU_trqDesEng 36 als ein Sollbetriebspunkt an das Aggregatsteuergerät 6 (ECU) für den Verbrennungsmotor zurückgemeldet und werden als zurückgemeldetes Basismoment ECU_trqBsln 60, zurückgemeldetes minimales Basismoment ECU_trqBsMinln 62, zurückgemeldetes Minimalmoment ECU_trqMinln 64 und Sollmoment ECU_trqDesEngln 38 im Aggregatsteuergerät 6 (ECU) für den Verbrennungsmotor zeitverzögert empfangen. Das Aggregatsteuergerät 6 (ECU) für den Verbrennungsmotor erhält somit zusätzlich Informationen über die Randbedingungen, die im übergeordneten Steuergerät 4 (HCU) für die Koordination bzw. die Bestimmung des gemeldeten Sollmoments ECU_trqDesEngln 38 gültig waren. Entspricht z. B. das gemeldete Sollmoment ECU_trqDesEngln 38 dem zurückgemeldeten Basismoment ECU_trqBsln 60, so hat das übergeordnete Steuergerät 4 (HCU) versucht, den Verbrennungsmotor bei idealem Zündwinkel zu betreiben.

Basierend auf diesen Betriebsparametern, die als die vier genannten Momente vorliegen, wird im Aggregatsteuergerät 6 (ECU) für den Verbrennungsmotor eine Korrektur des gemeldeten Sollmoments ECU_trqDesEngln 38 vorgenommen.

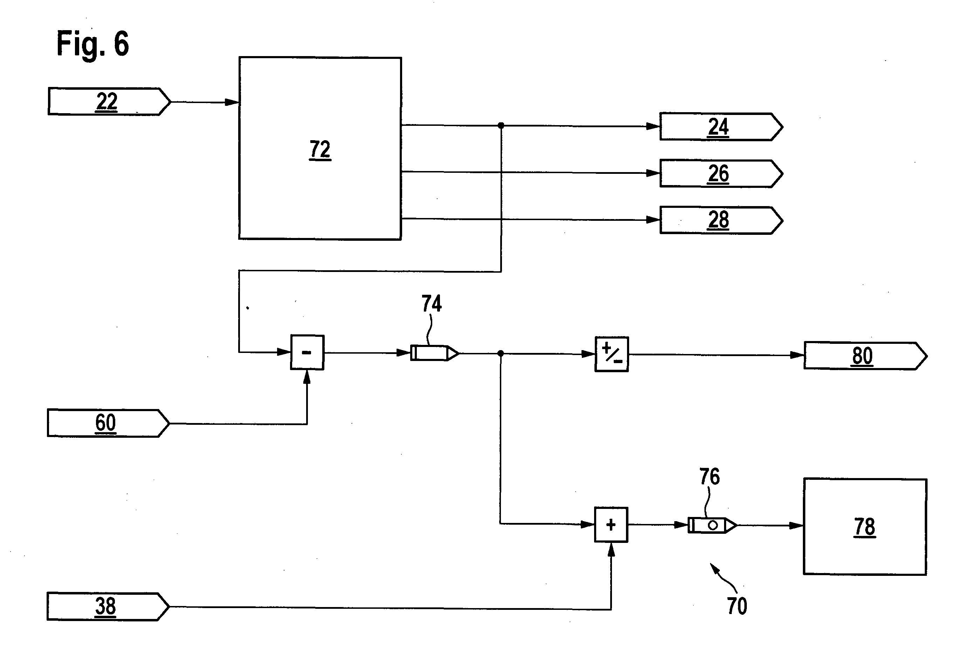

Die Anordnung 70 aus Figur 6 zeigt beispielhaft eine mögliche Methode zur Korrektur für den Fall, dass das gemeldete Sollmoment ECU_trqDesEngln 38 in der Nähe des zurückgemeldeten Basismoments ECU_trqBsln 60 liegt. Im hier gezeigten Block ECU_LeadPath/Limits 72 für das Aggregatsteuergerät 6 des Verbrennungsmotors ist der Luftpfad des Verbrennungsmotors modelliert, der unter anderem das momentane Basismoment ECU_trqBs 24 ermittelt.

Es wird ein erster Korrekturwert ECU_trqCorr 74 aus der Differenz zwischen dem momentanen Basismoment ECU_trqBs 24 und dem zurückgemeldeten Basismoment ECU_trqBsln 60 berechnet:

$$\text{ECU\_trqCorr} = \text{ECU\_trqBs} - \text{ECU\_trqBsln} \qquad (F3)$$

Dieser Wert für die Korrektur wird zu dem gemeldeten Sollmoment ECU-trqDesEngln 38 addiert, wodurch sich ein zu stellendes Sollmoment ECU_trqDesEng 76 ergibt, das an die Ansteuerung der Steller, bspw. von Zündungsendstufen usw., dargestellt durch den Block Eng_Control 78, weitergeleitet wird. Falls das gemeldete Sollmoment ECU_trqDesEngln 38 dem zurückgemeldeten Basismoment ECU_trqBsln 60 entspricht, stimmt das zu stellende Sollmoment ECU_trqDesEng 76 infolge der Korrektur mit dem momentanen Basismoment ECU_trqBs 24 überein, der Verbrennungsmotor wird demnach bei idealem Zündwinkel betrieben.

Um eine Verfälschung des von Verbrennungsmotor und Elektromotor gemeinsam erzeugten Summenmoments zu verhindern, wird ein weiterer Korrekturwert ECU_trqCorrEIM 80 für den Elektromotor berechnet, der sich aus dem Korrekturwert ECU_trqCorr 74 durch Ändern des Vorzeichens ergibt

$$\text{ECU\_trqCorrEIM} = - \text{ECU\_trqCorr} \qquad (F4)$$

und von dem Aggregatsteuergerät 6 (ECU) des Verbrennungsmotors an das Aggregatsteuergerät 8 (MCU) des Elektromotors gemeldet wird. Auch hier wird eine Zeitverzögerung von 10 Millisekunden angenommen. Simulationen zeigen, dass diese Verzögerung das Summenmoment zwar verfälscht, der Effekt aber gering ist, da die zeitliche Änderung des Korrekturwerts ECU_trqCorrEIM 80 üblicherweise begrenzt ist. Der daraus resultierende, im Aggregatsteuergerät 8 (MCU) des Elektromotors verfügbare, verzögerte Korrekturwert MCU_trqCorrEIMln 82 wird auf das vom übergeordneten Steuergerät 4 (HCU) gemeldete und ebenfalls um 10 Millisekunden verzögerte Sollmoment MCU-trqDesEIMln 54 aufgeschaltet. Es ergibt sich demnach für das von dem Elektromotor zu stellende Sollmoment MCU_trqDesEIM 84:

$$MCU\_trqDesEIM = MCU\_trqDesEIMln + MCU\_trqCorrEIMln. \qquad (F5)$$

Das Diagramm aus Figur 7 zeigt die zeitlichen Verläufe bei einer Koordination im übergeordneten Steuergerät 4 (HCU) entsprechend dem Diagramm aus Figur 3 bei einem Sprung eines Fahrerwunschmoments von 20 Nm auf 100 Nm zum Zeitpunkt t = 0.1 Sekunden. Das zu stellende Verbrennungsmotorsollmoment ECU_trqDesEng 76 stimmt mit dem momentanen Basismoment ECU_trqBs 24 überein. Der Verbrennungsmotor wird beim idealen Zündwinkel betrieben. Ein Summensollmoment trqDesSum 86, das sich aus den zu stellenden Sollmomenten zusammensetzt

$$trqDesSum = ECU\_trqDesEng + MCU\_trqDesEIM \qquad (F6)$$

entspricht näherungsweise dem gefilterten Summensollmoment HCU_trqDesFlt 50 und ist um 10 Millisekunden verzögert. Im Bereich von t = 0.3 Sekunden entsteht eine geringfügig größere Abweichung von ca. 5 Nm, bedingt durch die betragsmäßig größere zeitliche Änderungen (Gradient) des Korrekturwerts ECU_trqCorr 74, in Verbindung mit der zeitlich verzögerten Umsetzung des Korrekturwerts an dem Elektromotor durch die sechste Verzögerung 59. Insgesamt ergibt sich ein günstiges Verhalten, da die Abweichung im Bereich der Umsetzungsgenauigkeit der Aggregate liegt.

Bei Bedarf kann der Korrekturwert ECU_trqCorr 74 gradientenbegrenzt werden, was zu einer reduzierten Abweichung des Summensollmoments trqDesSum 86, bei geringen Zündwinkeleingriffen am Verbrennungsmotor führt.

Die anhand von Figur 6 dargestellte Methode zur Korrektur ist als Beispiel zu sehen. Eine weitere Möglichkeit besteht darin, den Korrekturwert ECU_trqCorr 74 so zu wählen, so dass für das zu stellende Sollmoment ECU_trqDesEng 76 für das Aggregatsteuergerät 6 nachfolgendes Verhältnis F7 gilt:

$$(ECU\_trqDesEng - ECU\_trqBsMin) / (ECU\_trqBs - ECU\_trqBsMin)$$
$$=(ECU\_trqDesEngln - ECU\_trqBsMinln) / (ECU\_trqBsln - ECU\_trqBsMinln) \quad (F7)$$

falls

$$ECU\_trqBsMinln \le ECU\_trqDesEngln \le ECU\_trqBsln. \qquad (F8)$$

Damit ergibt sich:

$$ECU\_trqDesEng = ECU\_trqBs \text{ falls } ECU\_trqDesEngln = ECU\_trqBsln \qquad (F9)$$

oder

$$ECU\_trqDesEng = ECU\_trqBsMin \text{ falls } ECU\_trqDesEngln = ECU\_trqBsMinln$$
$$(F10)$$

Demnach wird eine lineare Abbildung innerhalb des durch eine Spätverstellung des Zündwinkels einstellbaren Momentenbereichs gewählt. Eine ähnliche Abbildung kann für den durch Einspritzausblendung darstellbaren Momentenbereich mit

$$ECU\_trqMinIn \leq ECU\_trqDesEngIn < ECU\_trqBsMinIn \qquad (F11)$$

gewählt werden. Weiterhin sind auch nichtlineare Abbildungen möglich.

Das beschriebene Verfahren kann eingesetzt werden, um Wirkungsgradverschlechterungen zu vermeiden und eine optimale dynamische Koordination der Antriebsaggregate trotz Zeitverzögerungen in der Kommunikation mehrerer Steuergeräte 4 und/oder Aggregatsteuergeräte 6, 8 zu ermöglichen.

Die gemeldeten Grenzen und somit Betriebsparameter des Betriebsbereichs, hier das Basismoment HCU_trqBs 30, ein minimales Basismoment HCU_trqBsMin 32 und ein Minimalmoment HCU_trqMin 34, werden zusammen mit dem im übergeordneten Steuergerät 4 (HCU) ermittelten Sollmoment HCU_trqDesEng 36 als ein Sollbetriebspunkt an das Aggregatsteuergerät 6 (ECU) für den Verbrennungsmotor zurückgemeldet. Bei stark dynamischem Verhalten der gemeldeten Grenzen kann im übergeordneten Steuergerät 4 (HCU) eine dynamische Korrektur der an das Aggregatsteuergerät 6 (ECU) zurückgemeldeten Größen anhand ihrer Gradienten erfolgen. Diese korrigierten Größen werden dann an das Aggregatsteuergerät 6 (ECU) zurückgemeldet. Damit lassen sich Zeitverzögerungen zumindest teilweise kompensieren.

Zusammengehörige Größen sollten zeitgleich bzw. gemeinsam übermittelt werden. Wird zum Beispiel ein CAN-Bussystem zur Kommunikation zwischen den Steuergeräten eingesetzt, so sollten die gemeldeten Grenzen und somit Betriebsparameter des Betriebsbereichs, hier das Basismoment HCU_trqBs 30, ein minimales Basismoment HCU_trqBsMin 32 und ein Minimalmoment HCU_trqMin 34, gemeinsam in einer CAN-Botschaft übermittelt werden. Auch die an das Aggregatsteuergerät 6 (ECU) zurückgemeldeten Größen, einschließlich des Sollbetriebspunktes, sollten alle in einer gemeinsamen CAN-Botschaft enthalten sein und somit zeitgleich übermittelt werden.

Das dargestellte Verfahren ist u. a. aufgrund der gemeinsamen Rückmeldung von Basismoment ECU_trqBsIn 60, minimalem Basismoment ECU_trqBsMinIn 62 und Minimalmoment ECU_trqMinIn 64 zusammen mit dem Sollmoment ECU_trqDesEngIn 38 robust gegenüber variierenden Zeitverzögerungen in der Kommunikation mehrerer Steuergeräte 4 und/oder Aggregatsteuergeräte 6, 8, deren Abarbeitungszyklen typischerweise nicht aufeinander synchronisiert sind.

**Patentansprüche**

1. Verfahren zur Koordination von zumindest einem Antriebsaggregat eines Fahrzeugs, wobei diesem zumindest einen Antriebsaggregat mindestens ein als Aggregatsteuergerät (6, 8) ausgebildetes Steuergerät zugeordnet ist, wobei ein übergeordnetes Steuergerät (4) vorgesehen ist, und wobei zwischen den Steuergeräten Informationen ausgetauscht werden, wobei zur Durchführung des Verfahrens

   - von mindestens einem Aggregatsteuergerät (6, 8) wenigstens ein Betriebsparameter zu einem Betriebsbereich des zumindest einen zugeordneten Antriebsaggregats dem übergeordneten Steuergerät (4) übermittelt wird, wobei
   - von dem übergeordneten Steuergerät (4) auf Grundlage des empfangenen, wenigstens einen Betriebsparameters ein Sollbetriebspunkt für das zumindest eine Antriebsaggregat ermittelt wird,
   **dadurch gekennzeichnet, dass**
   - der ermittelte Sollbetriebspunkt gemeinsam mit dem wenigstens einen Betriebsparameter an das mindestens eine Aggregatsteuergerät (6, 8) übermittelt wird, wobei von dem Aggregatsteuergerät (6, 8) nach Empfang des Sollbetriebspunkts und des wenigstens einen Betriebsparameters zu einem aktuellen Betriebsbereich des zumindest einen Antriebsaggregats wenigstens ein aktueller Betriebsparameter bestimmt wird, und wobei der empfangene Sollbetriebspunkt auf Grundlage des wenigstens einen empfangenen Betriebsparameters und des wenigstens einen aktuell bestimmten Betriebsparameters korrigiert wird.

2. Verfahren nach Anspruch 1,

   - bei dem von dem mindestens einen Aggregatsteuergerät (6, 8) zu einem ersten Zeitpunkt als der wenigstens eine Betriebsparameter ein erstes Basismoment (24, 26) gesendet wird, wobei
   - das gesendete, erste Basismoment (24, 26) bei einer Übermittlung zwischen dem mindestens einen Aggregatsteuergerät (6, 8) und dem übergeordneten Steuergerät (4) verzögert wird, wobei
   - aus dem gesendeten, ersten Basismoment (24, 26) ein verzögertes, zweites Basismoment (30, 32) als der wenigstens eine Betriebsparameter hervorgeht, das das übergeordnete Steuergerät (4) zu einem zweiten Zeitpunkt erreicht, wobei
   - durch das übergeordnete Steuergerät (4) aus dem zweiten Basismoment (30, 32) als Sollbetriebspunkt ein erstes Sollmoment (36) ermittelt wird, wobei
- das erste Sollmoment (36) und das zweite Basismoment (30, 32) von dem übergeordneten Steuergerät (4) gemeinsam gesendet werden, wobei
- das erste Sollmoment (36) und das zweite Basismoment (30, 32) bei einer Übermittlung zwischen dem übergeordneten Steuergerät (4) und dem mindestens einen Aggregatsteuergerät (6, 8) verzögert werden, und wobei
- aus dem zweiten Basismoment (30, 32) ein verzögertes, drittes Basismoment (60, 62) als der wenigstens eine Betriebsparameter hervorgeht, und aus dem ersten Sollmoment (36) ein verzögertes, zweites Sollmoment (38) als Sollbetriebspunkt hervorgeht, die das mindestens eine Aggregatsteuergerät (6, 8) zu einem dritten Zeitpunkt gemeinsam erreichen.

3. Verfahren nach Anspruch 1 oder 2, bei dem von dem mindestens einen Aggregatsteuergerät (6, 8) der empfangene Sollbetriebspunkt und der empfangene, wenigstens eine Betriebsparameter miteinander verglichen werden.

4. Verfahren nach Anspruch 1, bei dem ein Wert für eine Korrektur des von dem mindestens einen Aggregatsteuergerät (6, 8) empfangenen Sollbetriebspunkts aus einer Differenz zwischen dem wenigstens einen aktuell bestimmten Betriebsparameter und dem wenigstens einen empfangenen Betriebsparameter gebildet und zu dem empfangenen Sollbetriebspunkt addiert wird.

5. Verfahren nach Anspruch 1 oder 4, bei dem ein Wert für die Korrektur des von dem mindestens einen Aggregatsteuergerät (6, 8) empfangenen Sollbetriebspunkts durch Bildung einer linearen Abbildung unter Berücksichtigung des wenigstens einen aktuell bestimmten Betriebsparameters und des wenigstens einen empfangenen Betriebsparameters bestimmt wird.

6. Verfahren nach einem der Ansprüche 1, 4 oder 5, bei dem zwischen den Steuergeräten ergänzend zu dem wenigstens einen Betriebsparameter als mindestens ein Parameter eine Grenze für einen Wert der Korrektur übermittelt wird.

7. Verfahren nach einem der Ansprüche 1 oder 4 bis 6, bei dem die Korrektur in Abhängigkeit eines Betriebszustands des mindestens einen Antriebsaggregats und/oder Antriebsstrangs beeinflusst wird.

8. Verfahren nach einem der Ansprüche 1 oder 4 bis 7, bei dem eine Methode der Korrektur in Abhängigkeit eines Betriebszustands des zumindest einen Antriebsaggregats und/oder Antriebsstrangs gewählt wird.

9. Verfahren nach einem der Ansprüche 1 oder 4 bis 8, bei dem die Korrektur an das übergeordnete Steuergerät und/oder mindestens ein weiteres Aggregatsteuergerät gemeldet und dadurch mindestens ein weiteres Antriebsaggregat beeinflusst wird.

**Claims**

1. Method for coordinating at least one drive assembly of a vehicle, wherein this at least one drive assembly is assigned at least one control unit which is embodied as an assembly control unit (6, 8), wherein a superordinate control unit (4) is provided, and wherein information is exchanged between the control units, wherein in order to carry out the method:

   - at least one operating parameter relating to an operating range of the at least one assigned drive assembly is transmitted from at least one assembly control unit (6, 8) to the superordinate control unit (4), wherein
   - a setpoint operating point for the at least one drive assembly is determined by the superordinate control unit (4) on the basis of the at least one received operating parameter,
   **characterized in that**
   - the determined setpoint operating point is transmitted, together with the at least one operating parameter, to the at least one assembly control unit (6, 8) and wherein at least one current operating parameter is determined by the assembly control unit (6, 8) after reception of the setpoint operating point and of the at least one operating parameter relating to a current operating range of the at least one drive assembly, and wherein the received setpoint operating point is corrected on the basis of the at least one received operating parameter and the at least one currently determined operating parameter.

2. Method according to Claim 1,

- in which a first basic torque (24, 26) is transmitted from the at least one assembly control unit (6, 8) at a first time as the at least one operating parameter, wherein

- the transmitted first basic torque (24, 26) is delayed during a transmission between the at least one assembly control unit (6, 8) and the superordinate control unit (4), wherein

- a delayed second basic torque (30, 32) emerges as the at least one operating parameter from the transmitted, first basic torque (24, 26), which second basic torque (30, 32) reaches the superordinate control unit (4) at a second time, wherein

- a first setpoint torque (36) is determined as a setpoint operating point from the second basic torque (30, 32) by the superordinate control unit (4), wherein

- the first setpoint torque (36) and the second basic torque (30, 32) are transmitted together by the superordinate control unit (4), wherein

- the first setpoint torque (36) and the second basic torque (30, 32) are delayed during a transmission between the superordinate control unit (4) and the at least one assembly control unit (6, 8), and wherein

- a delayed, third basic torque (60, 62) emerges as the at least one operating parameter from the second basic torque (30, 32), and a delayed, second setpoint torque (38) emerges as a setpoint operating point from the first setpoint torque (36), which together reach the at least one assembly control unit (6, 8) at a third time.

3. Method according to Claim 1 or 2, in which the received setpoint operating point and the received, at least one operating parameter are compared with one another by the at least one assembly control unit (6, 8).

4. Method according to Claim 1, in which a value for a correction of the setpoint operating point which is received by the at least one assembly control unit (6, 8) is formed from a difference between the at least one currently determined operating parameter and the at least one received operating parameter and is added to the received setpoint operating point.

5. Method according to Claim 1 or 4, in which a value for the correction of the setpoint operating point received by the at least one assembly control unit (6, 8) is determined by forming a linear mapping by taking into account the at least one currently determined operating parameter and the at least one received operating parameter.

6. Method according to one of Claims 1, 4 or 5, in which a limit for a value of the correction is transmitted between the control units in addition to the at least one operating parameter as at least one parameter.

7. Method according to one of Claims 1 or 4 to 6, in which the correction is influenced as a function of the operating state of the at least one drive assembly and/or drive train.

8. Method according to one of Claims 1 or 4 to 7, in which a correction method is selected as a function of an operating state of the at least one drive assembly and/or drive train.

9. Method according to one of Claims 1 or 4 to 8, in which the correction is signalled to the superordinate control unit and/or at least one further assembly control unit, and as a result at least one further drive assembly is influenced.

**Revendications**

1. Procédé de coordination d'au moins une machine d'entraînement d'un véhicule, au moins un appareil de commande configuré comme appareil (6, 8) de commande de machine étant associé à cette ou à ces machines d'entraînement, un appareil de commande (4) d'ordre hiérarchique plus élevé étant prévu et des informations étant échangées entre les appareils de commande, tandis que pour la mise en oeuvre du procédé
au moins un paramètre de fonctionnement concernant une plage de fonctionnement de la ou des machines d'entraînement associées est transmis par au moins un appareil (6, 8) de commande de machine à l'appareil de commande (4) d'ordre hiérarchique plus élevé,
sur la base du ou des paramètres de fonctionnement reçus, un point de fonctionnement de consigne de la ou des machines d'entraînement est déterminé par l'appareil de commande (4) d'ordre hiérarchique plus élevé,
**caractérisé en ce que**
le point de fonctionnement de consigne ainsi déterminé est transmis en même temps que le ou les paramètres de fonctionnement à l'appareil ou aux appareils (6, 8) de commande de machine, au moins un paramètre actualisé de fonctionnement étant défini par l'appareil (6, 8) de commande de machine après réception du point de fonctionnement de consigne et du ou des paramètres de fonctionnement concernant la plage de fonctionnement en cours de la ou des machines d'entraînement et

**en ce que** le point de fonctionnement de consigne reçu est corrigé sur la base du ou des paramètres de fonctionnement reçus et du ou des paramètres de fonctionnement actualisés ainsi définis.

2. Procédé selon la revendication 1, dans lequel un premier couple de base (24, 26) est envoyé par le ou les appareils (6, 8) de commande de machine en un premier instant en tant que premier ou premiers paramètres de fonctionnement,

le premier couple de base (24, 26) envoyé est retardé lors d'une transmission entre le ou les appareils (6, 8) de commande de machine et l'appareil de commande (4) d'ordre hiérarchique plus élevé,

à partir du premier couple de base (24, 26) envoyé, un deuxième couple de base (30, 32) retardé atteint l'appareil de commande (4) d'ordre hiérarchique plus élevé en un deuxième instant et qui constitue le ou les paramètres de fonctionnement,

un premier couple de consigne (36) est déterminé en tant que point de fonctionnement de consigne à partir du deuxième couple de base (30, 32) par l'appareil de commande (4) d'ordre hiérarchique plus élevé,

le premier couple de consigne (36) et le deuxième couple de base (30, 32) sont envoyés en même temps par l'appareil de commande (4) d'ordre hiérarchique plus élevé,

le premier couple de consigne (36) et le deuxième couple de base (30, 32) sont retardés en cas de transmission entre l'appareil de commande (4) d'ordre hiérarchique plus élevé et le ou les appareils (6, 8) de commande de machine et

à partir du deuxième couple de base (30, 32), un troisième couple de base (60, 62) retardé, constituant le ou les paramètres de fonctionnement, et à partir du premier couple de consigne (36) un deuxième couple de consigne (38) retardé qui constitue un point de fonctionnement de consigne atteignent le ou les appareils (6, 8) de commande de machine en un troisième instant.

3. Procédé selon les revendications 1 ou 2, dans lequel le point de fonctionnement de consigne reçu par le ou les appareils (6, 8) de commande de machine et le ou les paramètres de fonctionnement reçus sont comparés l'un à l'autre.

4. Procédé selon la revendication 1, dans lequel une valeur de correction du point de fonctionnement de consigne reçu par le ou les appareils (6, 8) de commande de machine est formée à partir de la différence entre le ou les paramètres de fonctionnement définis et actualisés et le ou les paramètres de fonctionnement reçus, et est ajoutée au point de fonctionnement de consigne reçu.

5. Procédé selon les revendications 1 ou 4, dans lequel une valeur de correction du point de fonctionnement de consigne reçu par le ou les appareils (6, 8) de commande de machine est déterminée par formation d'une représentation linéaire qui tient compte du ou des paramètres de fonctionnement définis et actualisés et du ou des paramètres de fonctionnement reçus.

6. Procédé selon l'une des revendications 1, 4 ou 5, dans lequel une limite de la valeur de la correction est transmise en tant que paramètre ou paramètres entre les appareils de commande en complément du ou des paramètres de fonctionnement.

7. Procédé selon l'une des revendications 1 ou 4 à 6, dans lequel la correction est modifiée en fonction de l'état de fonctionnement de la ou des machines d'entraînement et/ou du ou des trains d'entraînement.

8. Procédé selon l'une des revendications 1 ou 4 à 7, dans lequel une méthode de correction est sélectionnée en fonction de l'état de fonctionnement de la ou des machines d'entraînement et/ou du ou des trains d'entraînement.

9. Procédé selon l'une des revendications 1 ou 4 à 8, dans lequel la correction est communiquée à l'appareil de commande d'ordre hiérarchique plus élevé et/ou à au moins un autre appareil de commande de machine de manière à agir sur au moins une autre machine d'entraînement.

**Fig. 1**

Fig. 2

EP 2 451 687 B1

Fig. 3

Fig. 4

EP 2 451 687 B1

# Fig. 5

Fig. 6

Fig. 7

EP 2 451 687 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19646387 A1
- DE 19755311 B4
- DE 102008022082 A1
- EP 0507072 A1